Europäisches Patentamt

European Patent Office (11) Numéro de publication: **0 154 582**

Office européen des brevets **A2**

(12) **DEMANDE DE BREVET EUROPEEN**

(21) Numéro de dépôt: 85400292.0

(22) Date de dépôt: 19.02.85

(51) Int. Cl.⁴: **B 60 N 1/06**
**A 47 C 7/46**

(30) Priorité: 20.02.84 GB 8404356

(43) Date de publication de la demande:
11.09.85 Bulletin 85/37

(84) Etats contractants désignés:
AT BE CH DE FR GB IT LI NL SE

(71) Demandeur: Deshayes, Jean-Pierre Philippe
Freneuse-sur-Risle
F-27290 Montfort-sur-Risle(FR)

(71) Demandeur: Eames, Richard
Freneuse-sur-Risle
F-27290 Montfort-sur-Risle(FR)

(72) Inventeur: Deshayes, Jean-Pierre Philippe
Freneuse-sur-Risle
F-27290 Montfort-sur-Risle(FR)

(72) Inventeur: Eames, Richard
Freneuse-sur-Risle
F-27290 Montfort-sur-Risle(FR)

(74) Mandataire: Rinuy, Santarelli
14, avenue de la Grande Armée
F-75017 Paris(FR)

(54) Siège à dossier et assise, notamment pour véhicule automobile.

(57) L'invention se rapporte à un siège à dossier et assise notamment pour véhicule automobile.

Le dossier (1) comprend : - des moyens de suspension (24) permettant une suspension du dossier totalement indépendante de l'assise (3); - des moyens (9 à 12) lui permettant de s'imprimer mécaniquement de l'empreinte du dos de l'utilisateur de façon permanente et commandée; - des moyens (7-8) lui permettant de reprendre une partie du poids de l'utilisateur; l'assise (3) étant elle-même suspendue sur un parallélogramme (15-16-17) réglable indépendamment en hauteur, à tout moment, afin de transférer plus ou moins de charge au dossier suivant le désir de l'utilisateur.

L'invention s'applique, d'une manière générale, aux sièges comportant un dossier et une assise.

./...

Croydon Printing Company Ltd

FIG: 3

"Siège à dossier et assise, notamment pour véhicule automobile"

L'invention se rapporte à un siège à dossier et assise notamment mais non exclusivement pour véhicule automobile.

Elle consiste en un siège d'un type nouveau dont la suspension du dossier est indépendante de l'assise et dont le dossier moulant s'imprime de l'empreinte du dos de l'utilisateur de façon permanente et sur commande.

La plupart des sièges classiques sont étudiés de façon à reprendre tout le poids du corps sur l'assise. On constate que cette disposition est à l'origine de nombreux problèmes dans la région lombaire pour beaucoup de chauffeurs professionels. De plus la forme des dossiers ne respecte pas toujours l'anatomie et n'est rarement étudiée avec l'idée de maintenir le thorax de façon positive.

On constate également que de façon courante les sièges de véhicules sont conçus pour absorber les vibrations verticalement l'assise étant souvent montée sur une suspension en X. Il en résulte que le bassin est soumis à des mouvements verticaux, tandis que le dos glisse le long du dossier dont la pente est voisine de 9°. Il en résulte un effet de cisaillement des vertèbres lombaires à l'instant critique où elles sont déjà sollicitées fortement par des compressions supplémentaires dues aux effets dynamiques.

Une nouvelle conception du siège est nécessaire pour éviter ou amoindrir ces problèmes.

Le principe de la présente invention est un siège dont le dossier est suspendu complètement indépendamment de l'assise, et qui reprend une certaine partie du poids du chauffeur par le dossier; l'assise étant suspendue sur un parallélogramme qui peut être réglé en hauteur à tout moment afin de transférer plus ou moins de charge au dossier suivant le désir de l'utilisateur.

La suspension de l'assise est plus souple que la suspension du dossier afin que les vibrations et les chocs soient absorbés d'abord par le dossier.

Des points importants de l'invention sont :

1) une suspension du dossier indépendamment de l'assise;

2) un dossier baquet dans lequel on peut mouler sa forme dans la cambrure désirée sans l'interférence d'une mousse qui fausserait le moulage;

3) un confort maximum donné par un coussin pneumatique pouvant être semi-poreux pour l'aération qui peut être réalisée à la température désirée par un réchauffage ou un refroidissement de l'air injecté.

4) une assise suspendue sur un parallélogramme absorbant les chocs suivant une trajectoire voisine de celle du dossier pour éliminer au maximum les effets de cisaillement dans la région lombaire;

5) la hauteur de l'assise peut être réglée totalement indépendamment du dossier;

6) le dossier peut osciller d'avant en arrière avec l'amplitude et la dureté désirée. Il absorbe les vibrations et les chocs horizontaux propagés d'arrière vers l'avant (camion-citerne par exemple).

D'autres caractéristiques et avantages de la présente invention ressortiront de la description qui va suivre faite en regard des dessins annexés sur lesquels :

- la figure 1 est une vue d'ensemble d'une forme de réalisation d'un siège selon l'invention en perspective 3/4 avant avec dossier moulant mécaniquement;

- la figure 2 est une vue d'ensemble du siège en perspective 3/4 arrière avec dossier moulant mécaniquement et montrant un exemple de suspension hydraulique ou pneumatique extérieure au dossier;

- la figure 3 est une vue en coupe verticale dans le plan de symétrie d'une autre forme de réalisation d'un siège selon l'invention représentant un exemple de dossier moulant par des moyens pneumatiques à dépression et à compression avec système hydraulique ou pneumatique de suspension incorporée au dossier au moyen d'un vérin unique logé à l'intérieur du dispositif de guidage du dossier sur sa colonne inclinable et schématisant, par ailleurs, le système de suspension à parallélogramme de l'assise;

- la figure 4 est une vue en demi-coupe transversale suivant l'axe A-A de la figure 3 montrant, en particulier, le système de réglage d'ouverture et fermeture des demi-coquilles formant le dossier et la coupe de l'élément central contenant le système de suspension du dossier;

- la figure 5 est une vue de 3/4 avant du dossier moulant pneumatique suspendu;

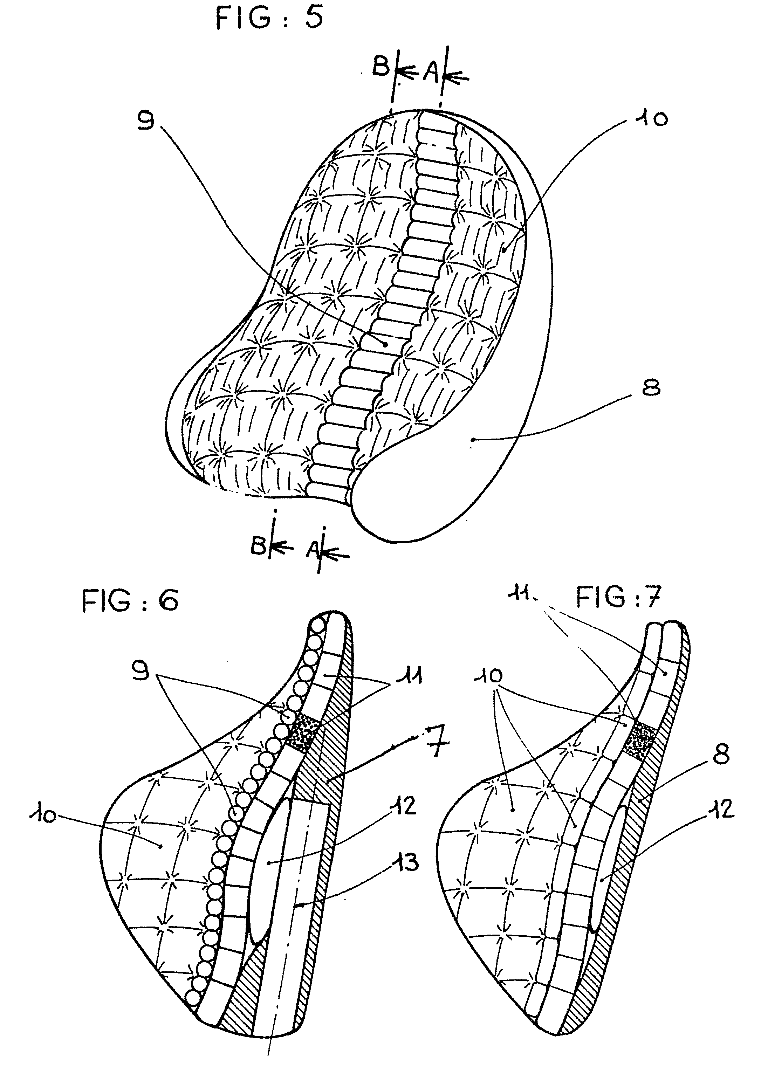

- la figure 6 est une vue en coupe suivant le plan vertical de symétrie contenant l'axe A-A de la figure 5;

- la figure 7 est une vue en coupe suivant le plan vertical parallèle au plan de symétrie contenant l'axe B-B de la figure 5; cette coupe est celle d'une demi-coquille ajustable.

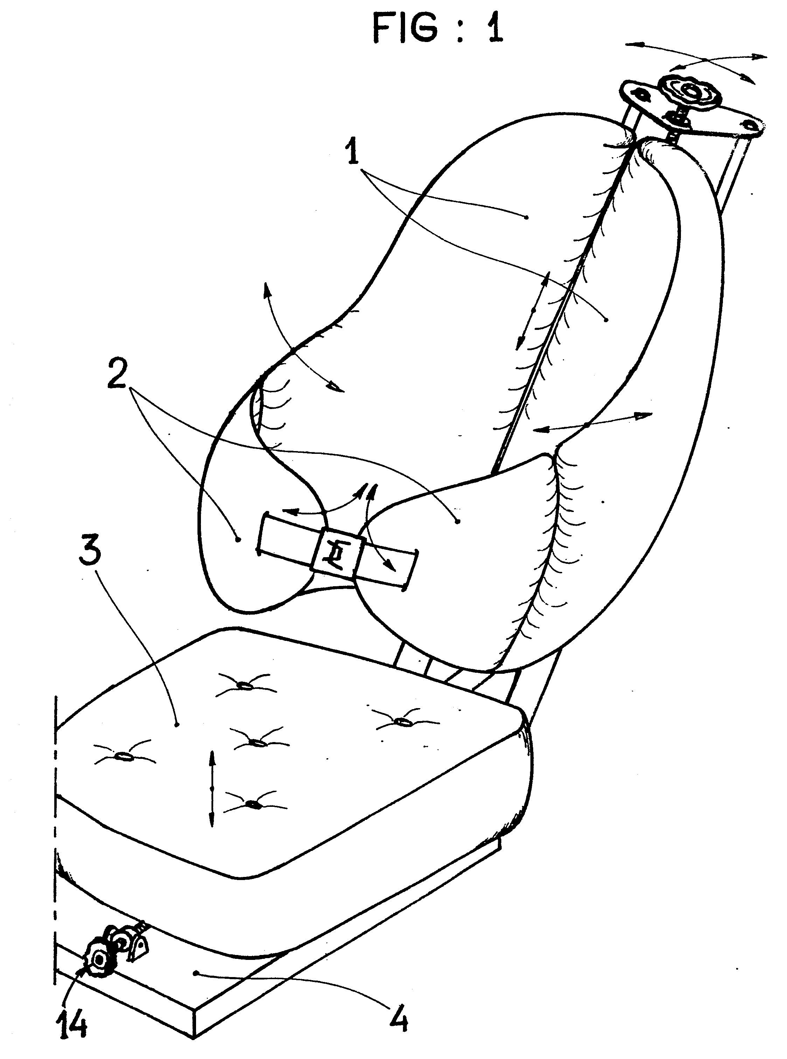

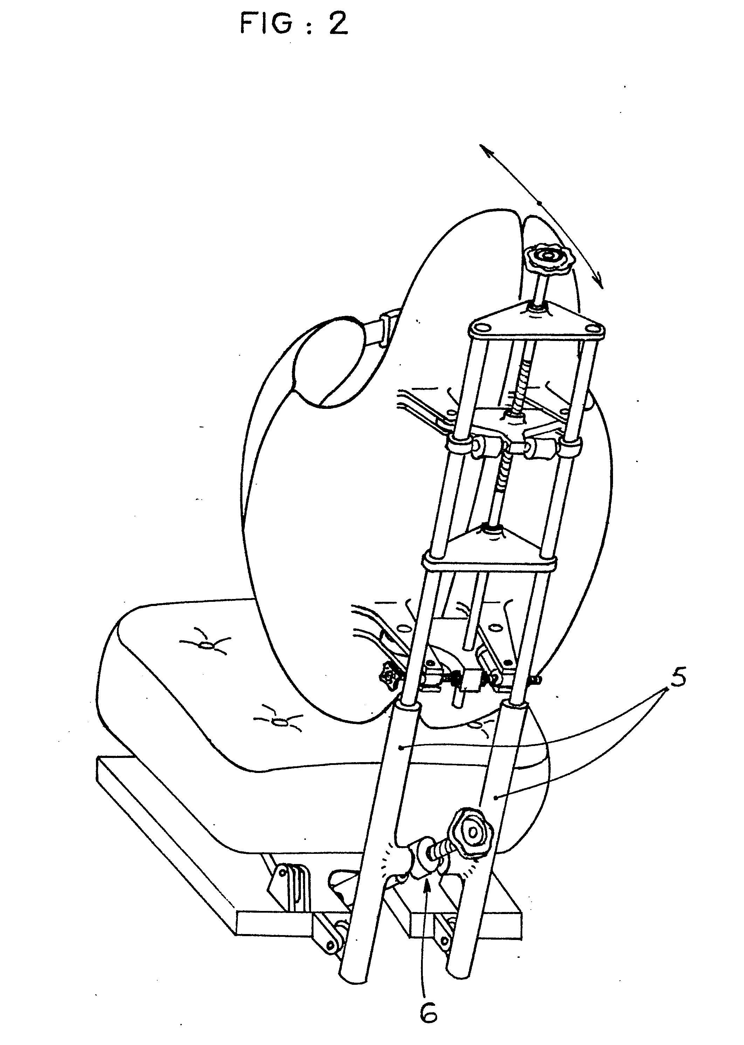

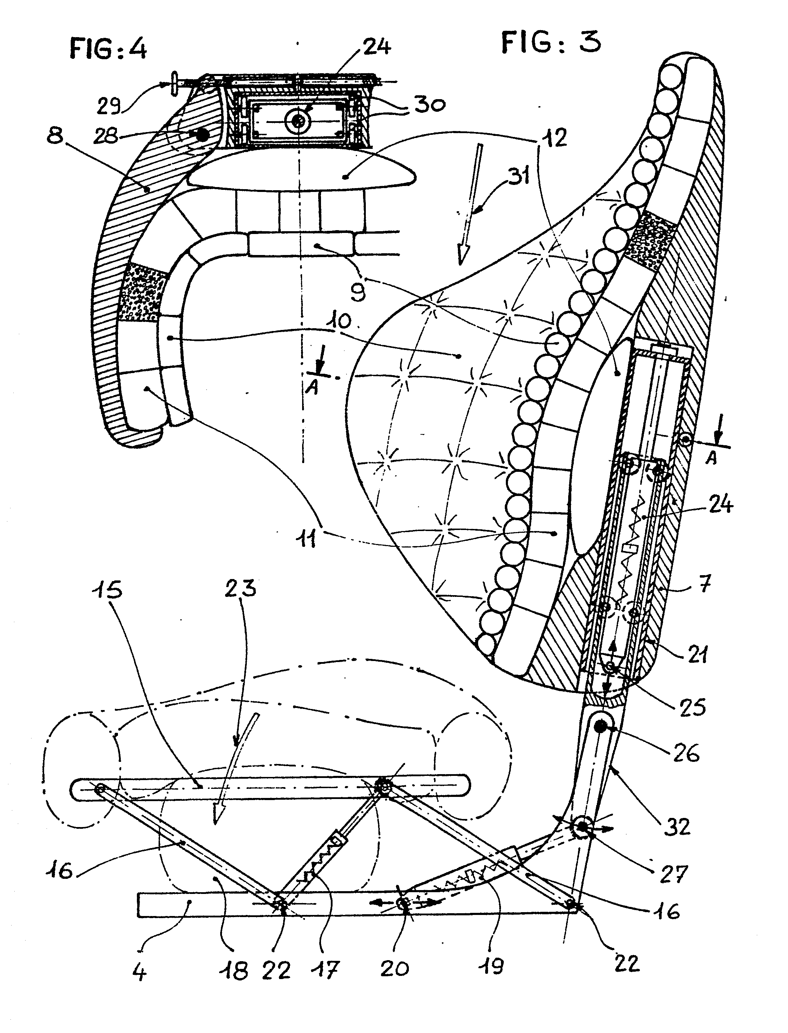

Dans les deux formes de réalisation représentées le dossier 1 est suspendu indépendamment de l'assise 3, par un dispositif 5 hydraulique, pneumatique ou autre, extérieur au dossier (Figs. 1 et 2) ou incorporé dans celui-ci 24. (Fig.3). L'ensemble du dossier est ajustable en hauteur et en inclinaison par le déplacement commandé des axes 25 et 20 (Fig.3).

Il est constitué de trois éléments principaux :

1°) une coquille 7 et 8 en polyester armé par exemple ou plastique, ou autre, contenant le mécanisme de suspension et ayant la faculté de s'élargir ou de se refermer pour s'adapter aux différents gabarits d'individus;

2°) un matelas à dépression 11 en nid d'abeilles rempli de billettes de polystyrène expansé pouvant être mis en forme au niveau des lombaires à l'aide d'un coussin pneumatique 12 réglable en pression;

3°) un élément de contact avec le corps qui est constitué d'un matelas pneumatique mince 10, cloisonné et dont la partie en contact avec la colonne vertébrale est un empilage de boudins 9 gonflables séparément du reste du matelas.

Ce revêtement pneumatique peut être semi-poreux pour assurer un maximum de confort à l'utilisteur (élimination de la transpiration).

L'assise 3 est suspendue sur un parallélogramme (constitué des biellettes 16 du châssis fixe 4 et du cadre mobile 15) par un moyen pneumatique réglable en hauteur 18. Les biellettes 16 de ce parallélogramme sont reliées deux à deux par des barres de torsion 22; le parallélogramme est maintenu en position maximum haute par deux amortisseurs 17 agissant sur sa petite diagonale. Il se déforme vers l'avant. Le déplacement 23 de l'assise pour absorber les chocs est pratiquement dans la même direction que le déplacement 31 du dossier afin d'éviter le cisaillement de la région lombaire.

Pour utiliser ce siège de façon optimale, on procède de la façon suivante :

1) l'utilisateur s'asseoit sur l'assise 3 puis règle la hauteur en fonction de son gabarit en agissant sur le volume d'air emmagasinée dans le coussin de suspension 18.

2) l'utilisateur ajuste le dossier à l'inclinaison désirée en agissant sur le pied 20 de vérin d'oscillation.

3) l'utilisateur ajuste l'écartement des deux demi-coquilles 8 du dossier à son gabarit puis donne la cambrure désirée à l'aide du coussin lombaire 12.

4) l'utilisateur imprime fortement son dos dans le matelas à dépression 11 rempli de billettes.

5) en maintenant sa position, l'utilisateur créé la dépression désirée dans le matelas à biellettes 11; Celles-ci se bloquent entre elles et conservent ainsi l'empreinte exacte du dos de l'utilisateur de façon plus ou moins rigide suivant le désir de celui-ci.

Le dossier est alors un moule parfait du dos de l'utilisateur.

6) le matelas pneumatique 9 et 10 est ensuite gonflé à la pression désirée (boudins et carrés de nids d'abeille séparément) pour assurer un maximum de confort. Il évite le contact direct avec le moule dur réalisé précédemment;

7) l'utilisateur ainsi moulé dans son dossier abaisse maintenant l'assise de la quantité désirée en libérant la quantité d'air nécessaire dans la suspension de l'assise.

La suspension du dossier se met alors à agir sur le thorax du chauffeur plus ou moins suivant le désir.

L'utilisateur est alors en partie suspendu au niveau du thorax par le dossier;

8) l'utilisateur règle ensuite la dureté du système amortisseur d'oscillation 19 du dossier en fonction des mouvements qu'il aura à effecuer, ou en fonction des sollicitations horizontales d'avant en arrière qu'il s'attend à subir.

Cet amortisseur est conçu pour être en position repos à mi-course de tige, l'équilibre étant maintenu par deux ressorts opposés.

D'autres détails de construction sont explicités ci-après :

- détail 2 : oreilles ventrales ajustables au gabarit de l'utilisateur, suivant une adaptation possible.

- détail 6 : Exemple de réglage de l'inclinaison du dossier oscillant par vérin hydraulique à position de repos à mi-course équilibrée par deux ressorts compensateurs incorporés et opposés de part et d'autre du piston.

- détail 7 : Elément central de la coquille en polyester ou autre matière sur lequel s'articulent les deux demi-coquilles (8) et recevant le corps (21) du système télescopique de suspension du dossier.

- détail 19 : Amortisseur hydraulique d'oscillation du dossier (ou mécanique, ou pneumatique ou autre), permettant de régler l'inclinaison du dossier en agissant sur la position de son pied (20) au moyen de la commande (14) par exemple. Ce vérin est en position repos la tige à demi sortie, sous l'effet de deux ressorts opposés agissant de part et d'autre du piston. Il est réglable en dureté et a pour fonction d'absorber les vibrations et les chocs propagés d'arrière en avant.

- détail 20 : Pied à position réglable, de l'amortisseur (19) d'oscillation du dossier. Il permet le réglage de l'inclinaison du dossier.

- détail 21 : Corps- guide contenant le système télescopique de suspension du dossier, logé dans la cavité (13) de l'élément central (7) du dossier.

- détail 24 : Vérin amortisseur de suspension du dossier. Il est au repos, maintenu en position tige à demi sortie au moyen de ressorts agissant en opposition sur le piston. La dureté est réglable et la position de son pied dans la colonne oscillante (32) est réglable en position assise de l'utilisateur par un moyen usuel (non décrit ici) permettant à son fût d'être déplacé axialement pour obtenir le réglage en hauteur du dossier. Il est guidé axialement dans la colonne 32 au moyen de glissières souples et silencieuses courantes .

- détail 27 : Axe de fixation de la tête du pied de la colonne de suspension à l'amortisseur d'oscillation auquel il transmet les chocs et vibrations.

- détail 32 : colonne oscillante recevant le système de suspension verticale du dossier, s'articulant en 26 sur le châssis (4) et transmettant les efforts d'oscillation à l'amortisseur (19) par son axe (27).

- détail 28 : Axe d'articulation d'une demi-coquille réglable, l'autre demi-coquille étant articulée symétriquement au moyen de la commande (29).

- détail 29 : Commande manuelle du réglage de l'ouverture des deux demi-coquilles constituant le dossier. Le système est réalisé dans l'exemple choisi au moyen d'une vis à deux filetages opposés (gauche et droite) et bloquée axialement sur le corps (21).

  - détail 30 : Huit galets de centrage et guidage du corps de suspension (21) du dossier sur la colonne oscillante (32).

4582
8

REVENDICAIONS

1. Siège à dossier et assise, notamment pour véhicule automobile, caractérisé en ce que le dossier (1) comprend :

- des moyens de suspension (5-24) permettant une suspension du dossier totalement indépendante de l'assise (3);

- des moyens (9 à 12) lui permettant de s'imprimer mécaniquement de l'empreinte du dos de l'utilisateur de façon permanente et commandée;

- des moyens (2-7-8) lui permettant de reprendre une partie du poids de l'utilisateur; l'assise (3) étant elle-même suspendue sur un parallélogramme (15-16-17) réglable indépendamment en hauteur, à tout moment, afin de transférer plus ou moins de charge au dossier suivant le désir de l'utilisateur.

2. Siège selon la revendication 1 caractérisé en ce que la suspension (15-16-17) de l'assise (3) est prévue plus souple que la suspension du dossier (1) afin que les vibrations et les chocs soient absorbés d'abord par le dossier.

3. Siège selon l'une quelconque des revendications 1 et 2 caractérisé en ce que l'assise (3) est suspendue sur un parallélogramme (15-16-17) absorbant les chocs suivants une trajectoire (23) voisine de celle (31) du dossier pour éliminer au maximum les effets de cisaillement dans la région lombaire de l'utilisateur.

4. Siège selon l'une quelconque des revendications 1 à 3 caractérisé en ce qu'un moyen (18) permet de régler la hauteur de l'assise (3) totalement indépendamment du dossier;

5. Siège selon l'une quelconque des revendications 1 à 4 caractérisé en ce que le dossier comprend des moyens (19) lui permettant d'osciller d'avant en arrière avec l'amplitude et la dureté désirées pour absorber les vibrations et les chocs horizontaux.

6.	Siège selon l'une quelconque des revendications 1 à 5 caractérisé ence que les moyens de suspension (5) du dossier sont extérieurs à ce dossier.

7.	Siège selon l'une quelconque des revendications 1 à 5 caractérisé en ce que les moyens de suspension (24) du dossier sont intérieurs à ce dossier.

8.	Siège selon l'une quelconque des revendications 1 à 7 caractérisé en ce qu'il comprend des moyens de réglage en hauteur (25) du dossier et des moyens de réglage de l'inclinaison du dossier (6-20).

9.	Siège selon l'une quelconque des revendications 1 à 8 caractérisé en ce que le dossier (1) comprend trois éléments principaux : - une coquille (7-8) - un matelas à dépression (11) et un élément (10) de contact avec le corps de l'utilisateur.

10. Siège selon la revendication 9 caractérisé en ce que la coquille (7-8) est réalisée en une matière ayant la faculté de s'élargir ou de se refermer sur commande pour s'adapter aux différents gabarits d'individus.

11.	Siège selon l'une quelconque des revendications 9 et 10 caractérisé en ce que la coquille (7-8) porte un coussin lombaire (12) donnant une cambrure désirée.

12.	Siège selon l'une quelconque des revendications 9 à 11 caractérisé en ce que l'ensemble coquille (7-8) et coussin lombaire (12) porte le matelas à dépression (11) rempli de billettes dans lequel l'utilisateur imprime son dos.

13.Siège selon l'une quelconque des revendications 9 à 12 caractérisé en ce que l'ensemble coquille (7-8), coussin lombaire (12) et matelas à dépression (11) porte un matelas pneumatique (9-10) gonflé à une pression désirée.

0154582

1/4

FIG : 1

2/4

FIG : 2

FIG:4    FIG:3

29
28
8
24
30
12
31
9
10
A
11
7
24
21
25
26
32
27
16
15
23
16
4    18  22  17  20  19    22

0154582

FIG : 5

414

B A

9

10

8

B A

FIG : 6

9

11

10

7

12

13

FIG : 7

11

10

8

12